# EUROPEAN PATENT APPLICATION

(11) **EP 2 457 441 A1**
(43) Date of publication of application: **30.05.2012**
(21) Application number: 11009377.0
(22) Date of filing: 25.11.2011
(51) Int. Cl.: A01N 31/14, A01N 43/30, A01N 49/00, A01P 7/04

(54) **Insecticide composition**

(30) Priority: 25.11.2010 ES 201031736
(71) Applicant: QUIMICA DE MUNGUIA, S.A., 48100 Munguia / Bizkaia (ES)
(72) Inventor: Perez de los Bueys, Carmelo, Munguia 48100 (Bizkaia) (ES)
(74) Representative: Tari Lazaro, Aida

(57) **Abstract**

Comprising a combination of two insecticidal molecules having different action mechanisms.

The first molecule selected is ETOFENPROX, CAS 80844-07-11. It acts at the level of the insect's nervous system causing a neuronal dysfunction by interacting with the sodium channel.

The second molecule selected is S-METHOPRENE, CAS 65733-16-6. It acts by both contact and ingestion. Its action is ovicidal and larvicidal, inhibiting the insect's growth by interacting with the insect's juvenile hormone, inhibiting normal development.

Optionally, the above combination may be synergized with PBO (piperonyl butoxide), CAS 51-03-6. This molecule, not an insecticide in itself, blocks the natural detoxifying system of the insect, favoring the insecticide's action.

## Description

The present invention refers to an insecticidal composition having adulticidal, ovicidal, and larvicidal functions while having low toxicity.

It is a combination of two insecticidal molecules having different action mechanisms, both having very low toxicity, and which actions can be optionally synergized by adding a PBO type synergic agent.

The first molecule selected is ETOFENPROX, CAS 80844-07-11. This molecule is already registered in the evaluation list according to Directive 9188/EEC. It is active both by contact and ingestion and has a broad spectrum efficacy, even in pyrethroids and carbamates-resistant species. It acts on the insect's nervous system, causing a neuronal dysfunction resulting from the interaction with the sodium channel. It combines its insecticidal activity against adult individuals with ovicidal and larvicidal actions that also act in the prior life stages of insects. Its toxicity is very low, with a LD50 value of 42880 mg/kg, or about 15 times less than that of common salt, in which the LD50 value is of 3000 mg/kg; and two times less than sugar, with a LD50 value of 29700 mg/kg. This characteristic makes the molecule have an optimum profile for household use, since the danger of primary or secondary intoxications due to use is practically eliminated, and even accidental instances of intoxication (ingested by children or pets...) are very reduced.

The second molecule selected is S-METHOPRENE, CAS 65733-16-6. This molecule is already registered in the evaluation list according to Directive 9188/EEC. It is active by both contact and ingestion and has a broad spectrum efficacy. It acts as ovicide and larvicide by inhibiting the growth of the insect. It interacts with the insect's juvenile hormone, inhibiting its normal development, causing incomplete pupation and sterile stages in adults and eggs. Toxicity, as in the first molecule discussed, is one of its strengths, since its DL50 value is above 10000 mg/kg. This characteristic makes the molecule have an optimum profile for household use, since the danger of primary or secondary intoxications due to use is practically eliminated, and even accidental instances (ingested by children or pets...) of intoxication are very reduced.

The aforementioned combination of molecules can be synergized by adding PBO (piperonyl butoxide), CAS 51-03-6. This molecule is already recorded in the evaluation according to Directive 9188/EEC. This molecule is not an insecticide in itself, but it significantly increases the activity of the molecule with adulticide properties (Etofenprox), because it inhibits MFOs (mixed function oxidases) blocking the insect's natural detoxifying system. This action favors the insecticide action, making lower doses more efficacious while eliminating instances of resistance. Adding a synergic agent (PBO) increases the efficacy and guaranty of the treatment, but this agent is not an essential component, the combination of Etofenprox/S-methoprene alone would meet the efficacy requirements.

The formulation thus defined would have a DL50 value > 700,000 mg/kg (figure calculated by extrapolation), which is equivalent to an extremely high safety range in case of household accidents by accidental contact or ingestion.

Different efficacy essays against mosquitoes, flies and cockroaches have been carried out at the premises of official organizations using different application doses. The results of the essays show the insecticide combination to be highly efficacious while having very low toxicity.

The advantages of this new insecticidal composition are numerous:
.- This new association of substances provides greater environmental and user safety, particularly when used inside the home.
.- These molecules are accepted in the European Biocidal Products Directive 98/8, that calls for harmonizing biocidal products in the European market, favoring the use of known molecules with well defined and studied toxicological and ecological toxicity profiles.
.- The molecules used have very low toxicity compared to those currently used and have a broad spectrum efficacy (adulticidal, ovicidal, larvicidal). Currently there is no other insecticide product having a better efficacy/toxicological profile ratio. This makes said combination ideal for household use, sensitive public spaces (schools, nursery schools, health centers, etc.) where toxicological safety is, aside from efficacy, an essential factor.

The combination may be variously formulated as:
.- Aqueous microemulsion, a ready to use format for the general public to reduce in as much as possible toxicological and ecological toxicity effects, by also eliminating the use of volatile organic compounds (VOCs).
.- Aerosols for household use, in discontinuous press mode and in total discharge mode.

The percentages of the molecules in the different formulations may be between the following ranges:
.- Etofenprox 0.1-1.5%
.- S-methoprene 0.05-0.25%
.- PBO 0.5-2%

One already tested standard formula is Etofenprox 0.475%, S-methoprene 0.10%, PBO 1%.

For a high dosage range:
.- Etofenprox 0.05-0.40 gr A.I./m2
.- S- methoprene 0.025-0.15 gr A.I./m2
.- PBO. 0.10-2 gr A.I./m2

A standard-type already tested dose is: Etofenprox 0.2 gr A.I./m2. S-methoprene 0.042 gr A.I./m2. PBO 0.42 gr A.I./m2.

## Claims

1. Insecticidal composition **characterized in that** it is constituted by a combination of ETOFENPROX, (CAS 80844-07-11) and S-METHOPRENE, (CAS 65733-16-6).

2. Insecticidal composition according to claim 1 **characterized in that** it includes PBO (piperonyl butoxide), (CAS 51-03-6).

3. Insecticidal composition according to claim 2 **characterized by** having the following formulation:
- Etofenprox 0.1-1.5%
- 5-methoprene 0.05-0.25%
- PBO 0.5-2%

4. Use of the insecticidal composition described in the previous claims at the following dosages:
.- Etofenprox 0.05-0.40 gr A.I-/m2
.- S- methoprene 0.025-0.15 gr A.I./m2
.- PBO. 0.10- 2 gr A.I./m2
